# DEMANDE DE BREVET EUROPEEN

(11) **EP 1 172 184 A1**
(43) Date de publication de la demande: **16.01.2002**
(21) Numéro de dépôt: 01401681.0
(22) Date de dépôt: 26.06.2001
(51) Int. Cl.: B25J 13/08, B25J 9/16

(54) **Dispositif de contrôle de la position d'un flasque de robot dans son environnement**

(30) Priorité: 05.07.2000 FR 0008721
(71) Demandeur: Renault Automation Comau, 92365 Meudon La Forêt Cedex (FR)
(72) Inventeur: Thurier, Yvan, 94320 Thiais (FR)
(74) Mandataire: Robert, Jean-Pierre

(57) **Abrégé**

L'invention concerne un dispositif de contrôle de la position d'un flasque de robot dans son environnement. Selon l'invention, il comprend d'une part une douille (100) liée à l'un des deux éléments du flasque et de l'environnement et de position connue relativement à cet élément, et d'autre part un senseur (101) lié à l'autre élément et de position connue relativement à cet élément, agencé pour repérer l'axe de la douille (100).

Ce dispositif peut être utilisé pour déterminer ou recaler la position du flasque du robot dans son environnemment.

## Description

L'invention concerne un dispositif de contrôle de la position flasque porte-outil d'un robot dans son environnement.

En fabrication ou dans un atelier de métrologie, il est souvent nécessaire de repérer précisément la position et l'orientation relatives d'un outil vis à vis de la pièce à fabriquer ou à mesurer. C'est notamment le cas d'outils montés à l'extrémité d'un bras robotisé, dont les jeux de fonctionnement imposent de recaler systématiquement la position du flasque dans son environnement.

En général, ce repérage est fait en deux étapes. La première consiste à positionner la pièce sur un outillage dont on connaît précisément la position par rapport à un repère de référence, ce qui permet d'en déduire la position et l'orientation de la pièce vis à vis de ce repère de référence.

La deuxième consiste à repérer la position et l'orientation du flasque du robot vis à vis de ce repère de référence, pour en déduire la position et l'orientation relatives de la pièce et de l'outil monté sur le flasque.

Pour ce faire, une méthode connue consiste à caractériser un axe préférentiel dans un repère lié au flasque, et d'amener cet axe en coïncidence avec un axe de référence de position et d'orientation connue par rapport au repère de référence.

Il reste alors à déterminer un point de référence le long de cet axe de référence et une orientation angulaire autour de cet axe pour déterminer complètement la position et l'orientation de l'outil par rapport au repère de référence.

On connaît des méthodes dans lesquelles on fait coïncider des points de l'outil ou du flasque avec des points du repère de référence matérialisés chacun par la pointe d'un cône ou d'une pyramide. Ces méthodes présentent l'inconvénient majeur de voir leur précision dépendre de l'habileté de l'opérateur du robot. Par ailleurs leur mise en oeuvre est longue et peu compatible avec un travail en chaîne.

Pour pallier ces inconvénients, on propose, selon l'invention, un dispositif de contrôle de la position d'un flasque de robot dans son environnement, comprenant d'une part une douille liée à l'un des deux éléments du flasque ou de l'environnement, de position connue relativement à cet élément, et d'autre part un senseur lié à l'autre élément et de position connue relativement à cet élément, agencé pour repérer l'axe de la douille.

Le robot est manoeuvré et amené dans une position telle que le senseur repère l'axe de la douille. On décide que dans cette position, un axe préférentiel lié à l'élément qui porte le senseur est en coïncidence avec l'axe de la douille portée par l'autre élément. Cette manoeuvre peut être automatisée, ce qui la rend rapide et répétable.

Bien sûr, la position du flasque du robot est indifférente par rotation autour de l'axe lié à l'environnement et par déplacement le long de cet axe.

On propose alors un tel senseur, comportant un corps à axe central portant au moins quatre palpeurs agencés pour coopérer avec la surface cylindrique intérieure de la douille, et montés mobiles sur le corps selon des directions radiales contenues dans deux plans de mesure distincts.

Les quatre palpeurs servent à obtenir une information significative de la distance de la surface intérieure de la douille à l'axe central du corps selon une direction radiale à cet axe central. On compare ces informations à quatre consignes, et on décide que le senseur est bien positionné sur l'axe de la douille quand les quatre informations sont égales aux consignes. On montre que quatre informations de ce type sont suffisantes pour déterminer la surface intérieure de la douille, donc son axe. Cette procédure ne repose que sur des informations obtenues par contact, ce qui enlève tout caractère de subjectivité à l'opération.

Selon un agencement particulier, les directions radiales de mobilité des palpeurs sont contenues par paire dans chacun des plans de mesure. Avantageusement, ces directions sont orthogonales entre elles dans au moins un plan de mesure.

C'est dans cette position que la discrimination du senseur est la meilleure.

Selon un autre agencement, les directions radiales de mobilité des palpeurs d'un plan de mesure sont opposées à celles contenues dans l'autre plan de mesure.

Cette disposition augmente elle aussi la discrimination du senseur. Ces deux agencements peuvent être combinés.

Avantageusement, au moins un palpeur est soumis à l'effet d'un moyen élastique de rappel en direction d'une butée de limitation de son extension radiale.

Cette extension est fixée légèrement supérieure au diamètre de la surface cylindrique intérieure de la douille, pour garantir le contact du palpeur avec la surface.

Au moins un palpeur est constitué d'un plot de contact avec la surface cylindrique en saillie de l'extrémité d'un levier articulé sur le corps. Avantageusement, le levier est articulé selon un axe sensiblement perpendiculaire à l'axe central et à la direction radiale

Cette disposition permet d'obtenir simplement le déplacement radial du plot sous l'effet de son contact avec la surface cylindrique.

Selon une caractéristique importante, le palpeur coopère avec l'extrémité mobile d'un capteur de déplacement lié au corps délivrant une information électrique significative de la distance selon la direction radiale de la surface cylindrique à l'axe central.

Ces informations sont comparées à des consignes pour indiquer si le senseur a reconnu l'axe de la douille ou non.

Selon l'invention encore, on munit le senseur d'un moyen destiné à repérer une position angulaire autour de l'axe.

Ce moyen permet de déterminer la direction de deux axes normaux à celui repéré précédemment, pour définir l'orientation d'un repère de référence.

On propose selon l'invention également, de munir un tel senseur d'un moyen pour repérer une position le long de l'axe de la douille.

De cette façon, on détermine la position du senseur selon l'axe de la douille. En combinant cette information avec la précédente, on a complètement déterminé l'orientation et la position d'un repère de référence, et on sait où se trouve le flasque du robot vis à vis de ce repère.

D'autres caractéristiques et avantages apparaîtront à la lumière de la description qui suit des dessins et figures annexées, parmi lesquelles :
- la figure 1 est une vue de l'agencement général d'un senseur selon l'invention ;
- la figure 2 est une vue en perspective de l'agencement d'une paire de palpeurs d'un plan de mesure du même senseur ;
- la figure 3 est une vue en perspective d'un levier constitutif d'un des palpeurs équipant le même senseur ;
- la figure 4 est une vue en perspective d'un senseur selon l'invention muni d'un capteur axial et d'un capteur angulaire ;
- la figure 5 est une vue en perspective d'un autre senseur selon l'invention muni d'un capteur axial.

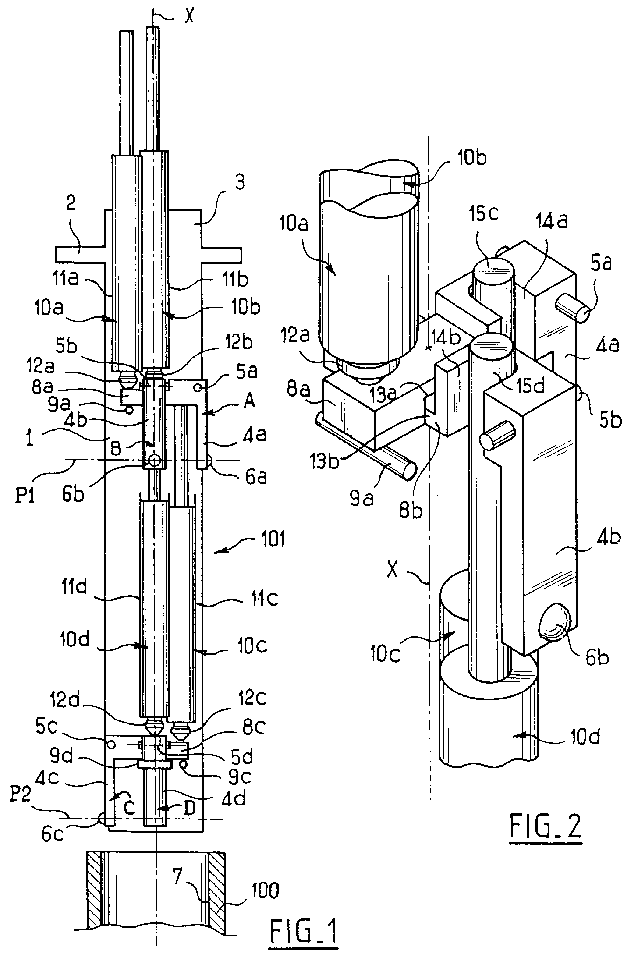

En référence à la figure 1, un senseur 101 selon l'invention comprend un corps 1 sensiblement cylindrique circulaire d'axe central X, comportant à une de ses extrémités une collerette 2 et une portion de cylindre 3 pour le positionnement sur le flasque d'un robot dont on veut aligner la direction matérialisée définie par l'axe central X sur une direction connue de l'environnement du robot.

Ce corps 1 porte quatre palpeurs A,B,C,D. Dans tout ce qui va suivre, les éléments constitutifs de chaque palpeur, très similaires, sinon identiques entre eux, reçoivent en index de leur référence la lettre minuscule correspondant à la lettre majuscule référençant le palpeur.

Ces palpeurs A,B,C,D sont composés d'un levier 4a,4b,4c,4d monté à rotation sur le corps selon un axe d'articulation 5a,5b,5c,5d contenu dans un plan normal à l'axe X et perpendiculaire à celui-ci. Les leviers 4a,4b,4c,4d s'étendent de leurs axes d'articulation 5a,5b,5c,5d selon une direction sensiblement parallèle à l'axe X, tous dans le même sens.

Les axes d'articulation 5a,5b sont perpendiculaires entre eux, et concourants. De même, les axes d'articulation 5c,5d sont perpendiculaires entre eux et concourants. Les deux plans définis par ces deux couples d'axes sont parallèles, et décalés axialement selon l'axe central X. L'axe 5a est parallèle à l'axe 5c, tandis que l'axe 5b est parallèle à l'axe 5d. Les quatre axes 5a,5b,5c,5d sont à la même distance de l'axe central X.

Les leviers 4a,4b,4c,4d portent en saillie extérieure à leur extrémité respectivement un plot de contact 6a,6b,6c,6d (le plot 6d n'est pas visible), destinés à coopérer avec une surface cylindrique circulaire 7 intérieure d'une douille 100, selon une zone de contact sensiblement ponctuelle. Typiquement, ces plots 6a,6b,6c,6d affectent la forme d'une portion de sphère dont l'apex vient au contact avec la surface cylindrique 7. Les apex des plots 6a,6b,6c,6d sont situés chacun dans un plan contenant l'axe central X. Les apex des plots 6a et 6b sont situés dans un plan de mesure P1 normal à l'axe central X. De même, les apex des plots 6c,6d sont situés dans un plan de mesure P2 normal à l'axe central X, et décalé axialement du plan de mesure P1.

Ces plots sont donc astreints à suivre une trajectoire circulaire selon l'axe d'articulation de leur levier porteur dans un plan contenant l'axe central X. Cependant, la petitesse de leur déplacement devant la longueur du levier autorise à assimiler la portion de trajectoire circulaire à sa tangente sensiblement perpendiculaire à l'axe central, définissant ainsi des directions radiales de mobilité pour les plots.

Le diamètre du corps 1 sera choisi plus petit que celui de la surface cylindrique 7, avec une marge suffisante compatible avec l'introduction à vue par l'opérateur du senseur 101 dans la douille 100 matérialisant la surface cylindrique 7. Par exemple pour une douille 100 de 30 mm de diamètre, on choisira un corps de 28 mm de diamètre.

Ces leviers portent chacun un levier de renvoi d'équerre, respectivement 8a,8b,8c,8d, (les levier de renvoi 8b et 8d ne sont pas représentés), s'étendant vers l'intérieur du corps 1 et coopérant chacun avec une des butées 9a,9b,9c,9d (la butée 9b n'est pas représentée) solidaires du corps 1, disposées pour limiter la rotation des leviers 4a,4b,4c,4d, afin de délimiter l'extension radiale des plots 6a,6b,6c,6d.

Cette extension radiale sera avantageusement choisie légèrement plus grande que le rayon de la surface cylindrique 7, pour garantir que le contact du plot 6a,6b,6c,6d avec cette surface 7 oblige le levier de renvoi à quitter la buttée 9a,9b,9c,9d.

Ce corps supporte également quatre capteurs de déplacement 10a,10b,10c,10d de forme élancée comportant une partie fixe 11a,11b,11c,11d solidaire du corps 1 dans laquelle est montée coulissante une partie mobile terminée par une tête 12a,12b,12c,12d. Ces capteurs 10a,10b,10c,10d sont disposés sensiblement selon l'axe X, de telle façon que leurs têtes 12a,12b,12c,12d coopèrent chacune avec les levier de renvoi 8a,8b,8c,8d, de façon que les têtes 12a,12b,12c,12d se rapprochent de leur parties fixes respectives 11a,11b,11c,11d quand le levier correspondant 4a,4b,4c,4d bouge dans le sens de la rotation qui n'est pas interdite par les butées 9a,9b,9c,9d. Un ressort non représenté équipe chacun des capteurs de déplacement 10a,10b,10c,10d tendant à éloigner la tête 12a,12b,12c,12d de la partie fixe 11a,11b,11c,11d, et donc forcer le levier de renvoi 8a,8b,8c,8d du levier 4a,4b,4c,4d correspondant contre sa butée 9a,9b,9c,9d. Ainsi, le contact du plot 6a,6b,6c,6d sur la surface cylindrique 7 induit une rotation du levier 4a,4b,4c,4d, et donc du levier de renvoi 8a,8b,8c,8d, qui fait bouger la tête 12a,12b,12c,12d du capteur de déplacement 10a,10b,10c,10d, qui délivre en réponse une information significative du déplacement du plot.

Ces informations sont comparées à des valeurs de consigne qui indiquent si la distance de la surface cylindrique 7 à l'axe central X selon la direction radiale est plus petite, égale ou plus grande qu'une distance déterminée par la valeur de consigne.

On manoeuvre alors le senseur 101 pour faire en sorte que les quatre informations soient égales à leur consigne respective. Lorsque cette état est atteint, on décide que l'on a repéré l'axe de la surface cylindrique 7.

On repère alors la position et l'orientation spatiales par rapport à un repère de référence du flasque du robot portant le senseur 101 placé dans ledit état.

Si au surplus, les quatre consignes sont réglées pour indiquer des distances de la surface à l'axe central X identiques, on a alors réalisé la coïncidence de cet axe central X avec l'axe de la surface.

Les capteurs de déplacement 10a,10b,10c,10d sont de préférence du type LVDT (en anglais : Linear Variable Differential Transformer), mettant en oeuvre un bobinage primaire porté par la partie fixe 11a,11b,11c,11d induisant dans deux bobinages secondaires des tensions U1 et U2 dont la variation est sensiblement proportionnelle au déplacement axial d'un noyau lié à la tête 12a,12b,12c,12d.

La figure 2 est une vue agrandie en perspective d'une paire de palpeurs dans l'agencement relatif qu'ils occupent dans le corps 1. On s'intéresse plus particulièrement aux palpeurs A et B, mais la description serait très similaire pour les palpeurs C et D.

En raison de l'étroitesse du corps 1 qui n'est pas représenté, les plans de mesure P1 et P2 sont décalés axialement d'une distance suffisante pour pouvoir loger dans la longueur du corps 1 les leviers 4a et 4b, ainsi que les capteurs de déplacement 10c et 10d.

Par ailleurs les leviers de renvoi 8a,8b ont été étudiés pour éloigner le plus possible le capteur de déplacement 10a,10b de l'axe d'articulation 5a,5b, ceci afin d'obtenir une meilleure résolution du capteur. D'où la disposition croisée desdits leviers de renvoi 8a,8b. Ces leviers de renvoi 8a,8b sont prévus avec des encoches parallélépipédiques 13a et 13b complémentaires (similaires aux entailles à mi-bois des menuisiers) pour éviter qu'ils interfèrent entre eux lors de leurs débattements angulaires autour de leurs axes d'articulation 5a,5b.

Par ailleurs, les capteurs 10c et 10d se trouvant exactement au droit des leviers de renvoi 8a et 8b, des passages 14a et 14b sont prévus dans lesdits leviers de renvoi pour laisser passer les fils électriques 15c et 15d alimentant les capteurs de déplacement 10c et 10d jusqu'à l'extrémité du corps 1. Ces passages n'ont pas leur contrepartie sur les leviers de renvoi 8c et 8d, puisque aucun fil ne doit passer en leur travers.

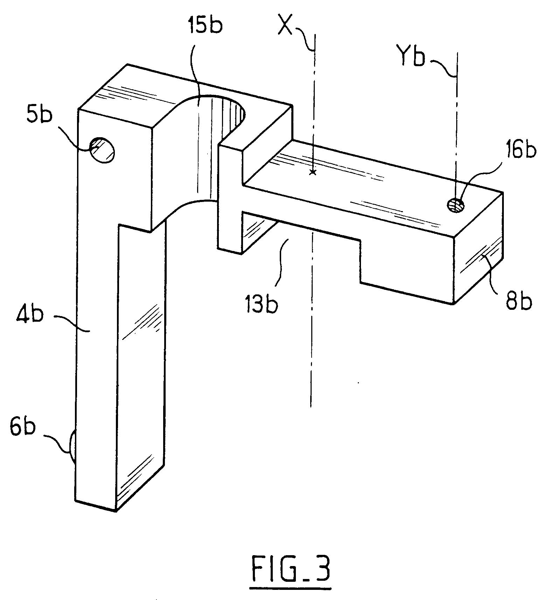

A la figure 3, on a illustré en perspective le levier 4b muni de son levier de renvoi 8b, de l'encoche 13b complémentaire de l'encoche 13a portée par le levier de renvoi 8a, et du passage 15b. Ce levier est articulé par l'axe 5b, et porte un plot 6b. On a représenté l'axe Yb du capteur 10b, sensiblement à l'axe central X, ainsi que la zone de contact 16b de la tête 12b du capteur 10b sur le levier de renvoi 8b. Cette zone 16b se trouve en extrémité du levier de renvoi 8b opposée à celle portant l'axe 5b.

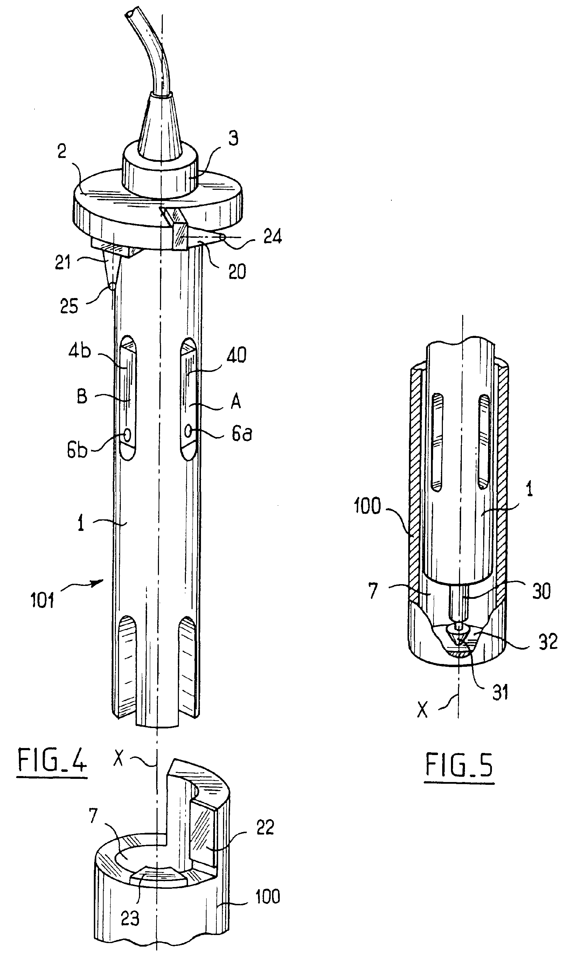

A la figure 4 est représenté un senseur 101 mettant en oeuvre le dispositif décrit ci-dessus, comportant en plus un capteur angulaire 20 et un capteur axial 21. On va ci-dessous expliquer comment un tel capteur peut repérer la position et l'orientation d'un repère de référence dans l'espace.

Jusqu'à ici, on a réussi à repérer un axe lié au repère de référence par coïncidence avec celui-ci de l'axe central X du senseur 101. On connaît donc la direction générale d'un plan normal à cet axe. Dans ce plan, il suffit de repérer une direction radiale remarquable. Une deuxième s'en déduit immédiatement, par exemple en choisissant la direction perpendiculaire à la fois à l'axe de la surface cylindrique 7 et à la première direction radiale. Ce faisant, on aura déterminé l'orientation d'un repère lié au repère de référence.

Pour repérer la première direction radiale, on commence par aligner l'axe central X du senseur 101 sur l'axe de la surface cylindrique 7, puis on fait tourner ce senseur 101 autour de cet axe jusqu'à ce que le capteur angulaire 20 rentre en contact avec un élément de butée angulaire 22 lié à la surface cylindrique 7, ou solidaire de son support. Ce contact angulaire permet de déterminer une et une seule orientation autour de l'axe de la surface cylindrique. On décide alors que dans cette orientation, le senseur 101 et son environnement associé a son repère aligné sur un repère lié au repère de référence, qui s'en déduit par une rotation connue.

Il reste alors à connaître la position de l'origine du repère. Pour cela, il suffit de d'aligner l'axe central X du senseur 101 sur l'axe de la surface cylindrique, puis de déplacer le senseur 101 selon cet axe jusqu'à ce que le capteur axial 21 entre en contact avec une butée axiale 23 liée à la surface cylindrique, ou à son support. On décide alors que le senseur 101 et son environnement associé a l'origine de son repère alignée sur l'origine d'un repère lié au repère de référence, qui s'en déduit par une translation connue.

Combinant les informations d'orientation et de position, il est finalement possible de repérer complètement la position et l'orientation du senseur 101 dans l'espace par rapport à un repère de référence.

Le capteur angulaire 20 est un capteur électrique susceptible d'entrer en contact au moyen d'une pointe 24 avec la butée 22, selon une surface contenue dans un plan passant par l'axe de la surface cylindrique 7. Le capteur axial 21 est quant à lui un capteur électrique susceptible de venir en contact au moyen d'une pointe 25 avec la butée 23, ici portée par la face d'extrémité de la douille 100 portant la surface cylindrique 7.

A la figure 5, on présente une variante du senseur 101 précédent, dans laquelle le capteur axial 30 est un capteur de type LVDT monté sensiblement selon l'axe central X, dont la partie mobile se termine par une tête 31 destinée à coopérer avec le fond 32 de la douille 100. Ce capteur axial 30 peut être monté dans le senseur 101 au travers des leviers de renvoi 8c et 8d, au moyen d'orifices non représentés ici pratiqués dans chaque levier de renvoi 8c et 8d au niveau de leurs encoches 13c et 13d (non représentées, mais similaires aux encoches 13a et 13b).

L'invention ne se limite pas au cas particulier décrit ci-dessus, mais entend au contraire englober toute variante, qui, avec des moyens équivalents, en reproduit les caractéristiques essentielles.

En particulier, on pourra grouper les palpeurs A,B,C,D par plus de deux dans un seul plan de mesure, par exemple une configuration à trois palpeurs dans un plan de mesure et un ou plusieurs palpeurs dans un autre.

On pourra envisager des palpeurs A,B,C,D montés rotatifs selon un axe vertical, et les faire coopérer avec des capteurs de déplacement montés axialement au moyen d'une surface oblique solidaire du palpeur. Le capteur angulaire 20 et le capteur axial 21 pourront être placés dans une position arbitraire vis à vis des capteurs A,B,C,D. Le capteur angulaire 21 pourra être un capteur optique capable de repérer une marque réalisée sur la face d'extrémité de la douille 100 portant la surface cylindrique 7.

## Revendications

1. Dispositif de contrôle de la position d'un flasque de robot dans son environnement, comprenant d'une part une douille (100) liée à l'un des deux éléments du flasque et de l'environnement et de position connue relativement à cet élément, et d'autre part un senseur (101) lié à l'autre élément et de position connue relativement à cet élément, le senseur (101) comportant un corps (1) à axe central (X) portant au moins quatre palpeurs (A,B,C,D) agencés pour coopérer avec la surface cylindrique (7) intérieure de la douille (100), et montés mobiles sur le corps (1) selon des directions radiales contenues dans deux plans de mesure (P1,P2) distincts, les directions de mobilité des palpeurs (A,B,C,D) étant contenues par paires dans chaque plan de mesure (P1,P2), **caractérisé en ce que** les directions de mobilité des palpeurs (A,B,C,D) sont orthogonales entre elles dans au moins un plan de mesure (P1,P2).

2. Dispositif selon la revendication 1, **caractérisé en ce que** les directions radiales de mobilité des palpeurs (A,B,C,D) d'un plan de mesure (P1) sont opposées à celles contenues dans l'autre plan de mesure (P2).

3. Dispositif selon l'une des revendications précédentes, **caractérisé en ce qu'**au moins un palpeur (A,B,C,D) est soumis à l'effet d'un moyen élastique de rappel en direction d'une butée (9a,9b,9c,9d) de limitation de son extension radiale.

4. Dispositif selon l'une des revendications précédentes, **caractérisé en ce qu'**au moins un palpeur (A,B,C,D) est constitué d'un plot de contact (6a,6b,6c,6d) avec la surface cylindrique 7 en saillie de l'extrémité d'un levier (4a,4b,4c,4d) articulé sur le corps (1).

5. Dispositif selon la revendication 4, **caractérisé en ce que** le levier (4a,4b,4c,4d) est articulé selon un axe (5a,5b,5c,5d) sensiblement perpendiculaire à l'axe central (X) .

6. Dispositif selon l'une des revendications précédentes, **caractérisé en ce que** le palpeur (A,B,C,D) coopère avec un capteur de déplacement (10a,10b,10c,10d) par une tête (12a,12b,12c,12d) à l'extrémité de sa partie mobile, délivrant une information significative de la distance de la surface cylindrique (7) à l'axe central (X) selon la direction radiale de mobilité du palpeur (A,B,C,D).

7. Dispositif selon la revendication 6, **caractérisé en ce que** le capteur de déplacement (10a,10b,10c,10d) est agencé parallèlement à l'axe central (X), et coopère avec le palpeur (A,B,C,D) au moyen d'un levier de renvoi (8a,8b,8c,8d) solidaire du palpeur (A,B,C,D).

8. Dispositif selon l'une des revendications précédentes, **caractérisé en ce qu'**il est pourvu d'au moins un capteur (20) pour coopérer avec un obstacle angulaire (21) lié à la surface cylindrique (7).

9. Dispositif selon l'une des revendications précédentes, **caractérisé en ce qu'**il est pourvu d'au moins un capteur (22;30) pour coopérer avec un obstacle axial (23;32) lié à la surface cylindrique (7).
